# EUROPEAN PATENT APPLICATION

(11) **EP 1 391 240 A1**
(43) Date of publication of application: **25.02.2004**
(21) Application number: 02015061.1
(22) Date of filing: 05.07.2002
(51) Int. Cl.: B01J 23/63, C01B 3/58

(54) **Method for preparing a catalyst for preferential oxidation to remove carbon monoxide from a hydrogen-rich gas, a process for preferential oxidation to remove carbon monoxide from hydrogen-rich gas and a method for operating a fuel cell system**

(30) Priority: 03.06.2002 EP 02012172
(71) Applicant: PAUL SCHERRER INSTITUT, 5232 Villingen PSI (CH)
(72) Inventor: Newson, Esmond, Dr., 8200 Schaffhausen (CH); Truong, Thanh-Binh, 5033 Buchs (CH)
(74) Representative: Fischer, Michael, Dr.

(57) **Abstract**

A method for preparing a catalyst for preferential oxidation to remove carbon monoxide from a hydrogen-rich gas stream, comprising:
forming an impregnated support material by impregnating a metal oxide or a mixture of metal oxides with a soluble rare earth metal compound or with a soluble mixture of rare earth metal compounds;
drying the impregnated support material; and
forming the catalyst by dispersing a precious metal or a mixture of precious metals on the impregnated support material.

Further, a process for preferential oxidation to remove carbon monoxide from a hydrogen-rich gas stream, is disclosed, the process comprises:
contacting the hydrogen-rich gas stream with a catalyst, manufactured according the method given above, under the condition of elevated temperature and pressure as compared to standard condition (20°C, 1 bar).

Furthermore, a method for operating a fuel cell system is disclosed comprising a process for preferential oxidation to remove carbon monoxide from a hydrogen-rich gas stream being performed under the conditions as described above. This process is successively performed after a process combining steam reforming and water gas shift reaction of a gas stream containing initially a hydrocarbon or an oxygenate.

## Description

The invention relates to a method for preparing a catalyst for preferential oxidation to remove carbon monoxide from a hydrogen-rich gas, a process for preferential oxidation to remove carbon monoxide from a hydrogen-rich gas and and a method for operating a fuel cell system.

Hydrogen is currently used mainly in industry, in activities such as the manufacture of fertilizers, petroleum processing, methanol synthesis, annealing of metals and producing electronic materials. In the foreseeable future, the emergence of fuel cell technology will extend the use of hydrogen to domestic and vehicle applications.

With respect to vehicle applications the proton exchange membrane (PEM) fuel cell vehicle is expected to be the most promising one for private and public transportation. The first automobile manufacturers have successfully launched prototype vehicles comprising PEM fuel cell stacks not larger than a conventional combustion engine. These stacks offer a permanent power of about 40 to 50 kW while operating with neat hydrogen. Advanced experiences from powering submarines with PEM fuel cells show for the PEM fuel cell system technology a rapid development whereby the choice of fuel for a passenger vehicle did not so far keep pace.

Generally, three possible fuel options are discussed. They are hydrogen, methanol and gasoline whereby for both the latter, high temperature fuel processors are required onboard instead of the appropriate means for the storage of neat hydrogen. This is still a task to be resolved satisfactorily, since the storage of liquid hydrogen is connected with the technical challenge of the logistics and cryogenics.

Currently, fuel processing technologies tend to generate hydrogen instantly onboard based either on steam-reforming, on partial oxidation or autothermal reforming. Each approach has its merits. While partial oxidation is a fast exothermic process resulting in rapid start-up and short respose times, steam reforming is endothermic and very efficient, producing hydrogen from both the fuel and the steam. Autothermal reforming is a combination of the two above methods.

As shown in the prior art an ideal fuel processor is a likely combination of partial oxidation and steam reforming (see EP 0 217 532, EP 0 262 947). These documents show that the two reactions can be carried out simultaneously with a catalyst that has been described according to the European patent application EP 0 495 534 as comprising a ceria stabilized zirconia carrier promoted with Rhodium and/or Ruthenium thereon. This catalyst led to a considerable yield of hydrogen but the problem that a certain amount of carbon monoxide is generated unavoidably during the hydrogen generation process has to be resolved in order to decrease the concentration of the carbon monoxide significantly. Otherwise, the reliability and life time of the catalytic material of the anode of the connecting PEM fuel cell will suffer significantly from carbon monoxide poisoning.

The article "Carbon Monoxide removal from hydrogen-rich fuel cell feedstreams by selective catalytic Oxidation" from Se H. Oh and Robert M. Sinkevitch, published in Journal of Catalysis 142, 254 to 262 (1993) discloses that the product stream from a typical fuel processing system that performs as a steam reformer and water gas shifter typically contains 0.5 to 1 vol% of CO, which severely degrades the fuel cell performance due to the poisoning of the anode oxidation rates. Thus, a viable fuel cell system requires that CO should be removed from the hydrogen-rich reformed gas down to concentration levels below 0.1 vol%, preferably 0.01 vol% for extended operation while minimizing the consumption of hydrogen.

Possible strategies to accomplish this task include CO removal by adsorption, reduction or oxidation. Among these, selective CO removal by catalytic oxidation (i.e. CO + ½ O₂ = CO₂) appears to be the most promising approach. Adsorption processes typically require unacceptably large volumes of adsorbent. Reduction steps, such as methanation (CO + 3 H₂ = CH₄ + H₂O), appear attractive; however, the presence of CO₂ in the gas stream severely compromises the processes by generating additional CO as a result of a "shift" of CO₂. Further, the authors indicate that previous works have shown Pt/Al₂O₃ catalysts to be effective in selectively oxidizing CO in the presence of excess H₂, but close control of the reactor temperature and the oxygen injection rate is required. Recent efforts in this area have been directed toward improving the selectivity of Pt/Al₂O₃ for CO conversion in a hydrogen-rich reformed gas stream through optimization of the design and operation of the so-called "preferential oxidation reactor" (PROX). Among the designs evaluated is a concept of a multiple-stage PROX, where the amount of oxygen injected and the temperature level for each stage are optimized to effectively remove CO while minimizing hydrogen oxidation. It can be easily understood that the multiple-stage PROX requires a non trivial combination of sensors, valves and the respective control hard- and software.

Therefore, a variety of catalytic materials, including noble metals (Pt, Pd, Rh and Ru) and base metals, such as Co/Cu, Ni/Co/Fe, Ag, Cr, Fe and Mn, were evaluated in a laboratory reactor feedstream containing CO, H₂, in order to identify alternate catalysts which are more effective than currently used Pt/Al₂O₃ in selectively oxidizing CO in the presence of excess hydrogen. Both Ru/Al₂O₃ and Rh/Al₂O₃ are among the most active catalysts for CO oxidation, achieving nearly complete CO conversion at temperatures as low as 100°C as compared to approx. 200°C required for currently used Pt/Al₂O₃. Furthermore, the Ru/Al₂O₃ and Rh/Al₂O₃ catalysts were found to be exceptionally selective for CO oxidation, making it possible to purify the fuel cell feedstream with a minimum loss of the energy content associated with the hydrogen content.

Nevertheless, in early 2002 the results of a recent experimental work with Pt/Al₂O₃ catalyst have been published under the title "Selective CO Oxidation over Pt/alumina catalyst for fuel cell applications" from Akkarat Manasilp and Erdogan Gulari in Applied Catalysis B: Environmental 37 (2002) 17 to 25. They showed that single step sol-gel made Pt/alumina catalysts have a high level of activity and selectivity necessary for catalyzing preferential oxidation of 1 % or less CO in the hydrogen-rich processor gas all the way down to a single digit amount of ppm CO. Addition of water vapour to the feed has a significant positive effect. It reduces the activation energy for both CO oxidation and hydrogen oxidation, thus conversion is increased significantly, unfortunately without changing the selectivity.

In comparison to the positive effect of water vapor it is disclosed that on the other hand the presence of realistic amounts of CO₂ in the feed has a detrimental effect on the activity of the catalysts. In order to achieve final CO conversion in the single digit ppm range the harmful water gas shift reaction is far away from equilibrium when there is water vapor and oxygen in the feed. Further, the results depict that the performance of the single-step sol-gel catalyst is defeated in comparison with an impregnation catalyst starting with a sol-gel alumina support for both the forward and reverse water gas shift reaction.

Nevertheless, it is still the aim of the invention to increase both the conversion rate and the selectivity of a catalyst for preferential oxidation purposes to annihilate the CO content in the feed for a fuel cell system. It is further an object of the invention to provide a process for preferential oxidation to remove carbon monoxide from a hydrogen-rich gas stream and to provide a process for operating a fuel cell system taking advantage, with respect to the harmful carbon monoxide content, of the purified feed.

According to the invention this aim with respect to the method for preparing a catalyst for preferential oxidation to remove carbon monoxide from a hydrogen-rich gas stream, comprising:
a) forming an impregnated support material by impregnating a metal oxide or a mixture of metal oxides with a soluble rare earth metal compound or with a soluble mixture of rare earth metal compounds;
b) drying the impregnated support material; and
c) forming the catalyst by dispersing a precious metal or a mixture of precious metals on the impregnated support material.

The achievable results have indicated much higher CO selectivity when impregnating the metal oxide with a soluble rare earth metal compound and afterwards dispersing the promoter metal. Due to the improved nano-distribution (the impregnated support material did not show in XRD analyses any peak for the rare earth metal compound) the catalytic activity of the catalyst has been increased significantly.

It could be found that excellent results are achieved when the metal oxide is alumina. In addition or alternatively, possible materials as refractory support material can be at least one of the group containing titania, zirconia and silica.

With respect to a suitable rare earth metal compound excellent carbon monoxide conversion rates result from using a cerium-salt as a rare earth compound. As a compound capable to be prepared for the impregnation process step, there may be employed, for example, cerium hydroxide, a cerium halide, a cerium oxyhalide, cerium nitrate,cerium ammonium nitrate cerium carbonite, cerium acetate, cerium oxalate, a cerium alkoxide such as cerium methoxide, cerium ethoxide, cerium propoxide, cerium isopropoxide or cerium butoxide, or the like. Among these compounds, the cerium alkoxide may be preferably employed.

Beside using a cerium compound, also a compound or a mixture of compounds from at least one rare earth metal selected from the group containing Praseodym, Neodym and Gadolinium.

For achieving an excellent micro-distribution of the precious metal the dispersion of the precious metal or the mixture of precious metals can be reached by impregnating the impregnated support material with a soluble precious metal compound or with a soluble mixture of precious metal compounds.

One of the most preferred precious metals is rhodium or ruthenium. As a raw material of rhodium, there may be mentioned, for example, a rhodium halide such as rhodium chloride or the like; a halogenated rhodinate such as sodium chlororhodinate, ammoniumchlororhodinate or the like; a halogenated rhodinic acid such as chlororhodinic acid or the like; a rhodiumhydroxide such as rhodium (III) hydroxide, rhodium (IV) hydroxide or the like; rhodium nitrate; rhodium oxide; or an organic rhodium compound such as rhodium carbonyl or the like. The raw material of ruthenium, there may be mentioned, for example, a ruthenium halide such as ruthenium iodide, ruthenium chloride or the like; a halogenated ruthenate such as ammonium chlororuthenate or the like; a halogenated ruthenic acid such as chloro-ruthenic acid or the like; a ruthenate such as potassium ruthenate or the like; or an organic ruthenium compound such as ruthenium carbonyl or the like. Among these raw materials for the precious metal ingredients of the catalyst, ruthenium trichloride or ruthenium nitrosylnitrate is preferably employed.

Furthermore, these raw materials for the precious metal ingredient of the catalyst may be employed singly or in combination of two or more.

In order to gain a longterm stabile refractory support material an amount of rare earth metal compound from 0.1 to 20, preferably 0.5 to 10 weight per cent of the total weight of the catalyst is highly recommended.

In order to support the catalytic activity in a sufficient manner and owing to the impregnation process step, the amount of precious metal is 0.01 to 10, preferably 0.05 to 5 weight per cent of the total weight of the catalyst which is also advantageous with respect to the manufacturing costs.

According to the invention for the process for preferential oxidation for removing carbon monoxide from a hydrogen-rich gas stream, the process comprises:
contacting the hydrogen-rich gas stream with a catalyst, manufactured according the method given above, under the condition of elevated temperature and pressure as compared with standard condition (20°C, 1 bar).

A suitable hydrogen-rich gas stream can be attained by passing a feed stream comprising a hydrocarbon or an oxygenate to a fuel processor comprising an integrated steam reforming and water gas shift conversion zone; said hydrogen-rich gas stream then comprises hydrogen, carbon monoxide, carbon dioxide, oxygen and water vapor.

In order to support the catalysts behaviour and process capabilities for selectively oxidizing carbon monoxide as desired and to avoid relevant oxidizing hydrogen as undesired in this context, the offer of oxygen has to be controlled to find both a maximum for oxidizing carbon monoxide and to cut down the supply for the undesired hydrogen oxidation. Therefore, the concentration of oxygen in the hydrogen-rich gas stream should be maintained between 1 to 10 times, preferably 2.5 to 5.0 times, of the stoichiometric requirement for the maximum conversion of CO to CO₂ and the minimum conversion of H₂.

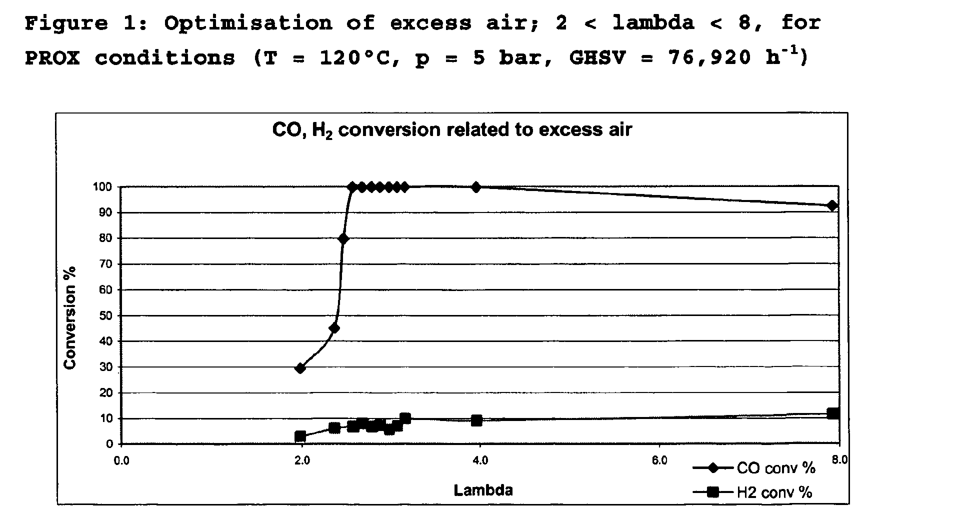

The figure shows that essentially 100% CO conversion is attained for 2.5 < lambda < 4.0 while maintaining not more than 5-10% of the undesired H₂ conversion. The data given in figure 1 have been measured with a catalyst and the micro reactor data condition as set out below in the description of some illustrative examples.

Additionally, since the concentration of water vapor offered to the catalyst has a significant impact on the performance of the process, the concentration of water vapor in the hydrogen-rich gas stream should be maintained between 0.1 to 10%, preferably 0.3 to 3%, as compared to the total feed gas flow.

From experimental observations, a two step mechanism of reaction is suggested showing the importance of water in the initial reduction of ruthenium and oxidation of CO:
1) H₂O + RuCl₂ + CO = CO₂ + Ru(0) + 2 HCl
2) Ru(0) + 2 HCl + ½ O₂ = RuCl₂ + H₂O

The oxygen in the auxiliary air (lambda) reoxidises the Ru(0) which is required again to be reduced to allow the carbon monoxide to be oxidized to the desired carbon dioxide.

Other preferred process conditions are:
a) the temperature is between 60 and 250°C, preferably between 80 and 150°C; and/or
b) the pressure is between 1 to 10 bar, preferably between 2 to 5 bar; and/or
c) the gas hourly space velocity(litres of feed gas at standard condition/hour/litre reactor volume) is between 20,000 to 200,000 per hour, preferably between 50,000 and 150,000 per hour.

With respect to the method for operating a fuel cell system the invention comprises a process for preferential oxidation for removing carbon monoxide from a hydrogen-rich gas stream being performed under the conditions as described above.

In order to decrease the complexity of the fuel cell system it is foreseen to pass a feed stream comprising a hydrocarbon or an oxygenate to a fuel processor comprising a catalyst forming an integrated steam reformation and water gas shift conversion zone to produce a fuel stream, i.e. a hydrogen-rich gas, at a catalyst temperature lower than 700°C followed by passing the fuel stream over a catalyst for preferential oxidation to produce a purified fuel gas at least approximately free from carbon monoxide. It is the benefit of the invention that the use of a high temperature shift reactor and a low temperature shift reactor downstream of the integrated steam reformation and water gas shift conversion zone can be abandoned.

An excellent efficiency for the removal of the carbon monoxide can be achieved by a fuel stream containing about 50 to 50.000 ppm carbon monoxide. A high longterm reliability, i.e. a longterm activity of the anode of a PEM fuel cell, is reached by supplying a purified fuel gas containing less than 10 ppm carbon monoxide.

Additional advantageous variations of the inventions may be derived from the other dependent claims.

The present invention is further described by way of the following illustrative examples with respect to the preparation of the preferential oxidation catalyst and the micro reactor data. The experimental data gained with these catalysts is compared to the experimental data disclosed in the prior art, i.e. published patents and/or patent applications and scientific literature.

### Example 1: CO preferential oxidation (PROX) catalyst

### 1.1 Catalyst preparation

A batch of catalyst with a nominal composition of 5%Ru/5%CeO/Al₂O₃ (based on the proportion of the precursors) was prepared by first impregnating the crushed alumina support material with an aqueous Ce-salt solution to form a slurry; drying the slurry by the rotavap method and calcining the product in an airflow oven to provide a cerium doped support (CeO/Al₂O₃). Secondly, this cerium doped alumina support material was impregnated with an aqueous Ruthenium salt solution to form a slurry followed by drying the slurry by the rotavap method and afterwards calcining the product in an airflow oven to give the nominal compositions 5%Ru/5%CeO/Al₂O₃ (hereinafter referred to as PSI Ex.1).

Cerium doped support: 1 gram of crushed alumina support was impregnated with stirring for three hours with 4.0 ml of cerium(IV) ammonium nitrate (12.78 mg Ce/ml). The resulting slurry was transferred to a rotavap apparatus and dried at 85°C and 100 mbar pressure. Drying was completed in a drying oven overnight at 120°C and 100 mbar vacuum. Calcination with an airflow of 100 ml/min at 500°C for three hours completed the preparation of the cerium doped support (CeO/Al₂O₃).

PROX catalyst: 3.6 ml ruthenium nitrosylnitrate (14 mg Ru/ml) was added to the cerium doped support with stirring for three hours. The slurry was transferred to a rotavap apparatus and dried at 85°C and 100 mbar pressure. Drying was completed in a drying oven overnight at 120°C. Calcination with an airflow of 100 ml/min at 550°C for three hours completed the preparation of the PROX catalyst with a nominal composition of 5%Ru/5%Ce/Al₂O₃. Catalyst activation takes place in the reactor by heating up in N₂ to 200°C for outgassing, ½ hour hold, reduction in H₂ between 250 and 400°C, two hour hold, cool to 200°C in H₂, purge with N₂ to 120°C.

It should be pointed out at this occasion that the support material may be in all other reasonable form suitable for fixed bed reactor applications, such as spheres, extrudates, cylinders, tablets, rings and half-rings. It could be alternatively also in the form of monoliths or other structured support packings, such as ceramic honeycomb bodies, stacks of juxtaposed metallic plate-type catalysts having the catalytic material coated on the surfaces of the metallic plates, for fixed bed applications.

**Microreactor Data versus CO oxidation data from the patent literature**

A small bed of granulated catalyst (0.2 g) in the size range of 0.125 to 0.250 mm, nominal composition 5%Ru/5%Ce/Al₂O₃, was placed in a glass lined steel reactor and positioned at the center of an electrically heated oven. At a pressure of 5 bar absolute, the catalyst was activated by degassing in flowing nitrogen at 300°C, followed by a catalyst reduction at 550°C. The equation for the exothermic preferential oxidation of CO (desired reaction) in a synthetic reformate gas mixture with high hydrogen content (20 to 50%) with the addition of auxiliary oxygen in the form of air, is

CO + 0.5 O₂ = CO₂ (1)

which occurs in parallel with the undesired reaction, also exothermic

H₂ + 0.5 O₂ = H₂O (2).

The CO is removed from reformate gas to levels below 10 ppm implying conversions of 99.9%, allowing its use for PEM fuel cell operation without deactivating the fuel cell anode catalyst. The concomitant H₂ conversion should be far below 10% to maintain the overall efficiency of the reformer-PROX connection and facilitate heat management in the reactor.

The following table shows the experimental PROX results with the PSI Ex.1 catalyst and a comparison with the PROX results from prior art catalysts in the patent literature, i.e. US 6,299,995 - hereinafter referred to as UOP - and US 6,350,423 - hereinafter referred to as Toyota.

**Table 1:**

| **Experimental PROX catalyst data** | | | |
|---|---|---|---|
| **Parameter** | **UOP** | **Toyota** | **PSI Ex.1** |
| Temp., °C | 90 | 140 | 120 |
| Pressure, bar | | | 2 to 5 |
| GHSV, h⁻¹ | 5,000 | 4,800 | 133,320 |
| Inlet, %CO | 0.47 | 0.5 | 2.5 |
| Inlet, %O₂ | | | 3.7 |
| Inlet, %H₂ | 46.8 | 75 | 34.3 |
| Inlet, %CO₂ | 12.0 | 24.5 | 16.3 |
| Inlet, %N₂/rest | 4.0/36.7 | -/- | 43.2/- |
| Wt.% Ru/n.n. | 3.1/- | 0.4/0.003%Li | 5.0/4.0%Ce |
| CO conv., % | 100 | 99.9 | 99.9 |
| H₂ conv., % | | | 7.7 |
| Reaction rate* | 1.9 | 1.0 | 142 |

| | | | |
|---|---|---|---|
| * Reaction rate x 3.0 x 10⁻⁷, mol CO conversion/g catalyst/sec. | | | |

Thus, at similar conditions, the PSI catalyst of 5 wt.% Ruthenium on a cerium doped alumina support is approximately 75 to 142 times more active than the prior art catalyst UOP and Toyota resp. Additionally, the stability of the PSI catalyst was demonstrated by continuous operation at various conditions for 1200 hours. The surprising feature of the PSI catalyst is that the increased activity is not due to an additional metal promoter such as lithium (Toyota) or to an significantly higher content of a noble metal but the promotion of the support alumina with cerium oxide, presumably increasing its oxygen adsorption and dissociation properties. In detail, this higher activity is presumably caused by the nano-distribution of the cerium on the alumina support. In comparing the different catalysts, the catalyst prepared under impregnation with the aqueous cerium-salt solution does not show any peaks for ceria in an XRG analysis implying that both the ceria and the noble metal content are dispersed that far that grains over 50 Angstrom have not been built and as a consequence peaks for ceria and the noble metal could not be observed.

### Example 2: Comparison of PROX data, PSI Ex.1 catalyst versus published scientific literature

The results from the comparison of the PSI Ex.1 catalyst with two catalysts from the recent published scientific literature are shown in table 2. In this table 2, the first catalyst referred to as "Appl.Cat.B" is the catalyst disclosed in the article "Selective CO Oxidation over Pt/alumina catalyst for fuel cell applications" from Akkarat Manasilp and Erdogan Gulari in Applied Catalysis B: Environmental 37 (2002) 17 to 25, on page 18, right column, 2.1 catalyst preparation, containing 2 wt.% platinum. The second catalyst referred to as "Cat.Tod." is the catalyst which is disclosed in the article "Selective catalytic oxidation of CO in H₂: fuel cell applications" from Olga Korothikh and Robert Farrauto, published in Catalysis Today 62 (2000) 249 to 254.

Again, at very similar conditions, the PSI Ex.1 catalyst with a 5 wt.% ruthenium content on a cerium doped alumina support in comparison with the Appl.Cat.B. catalyst and the Cat.Tod. catalyst is 10 times and 32 times, resp., more active than these catalysts taken from the recently published scientific literature.

**Table 2:**

| **Comparison of PROX reactor data versus patent literature** | | | |
|---|---|---|---|
| **Parameter** | **Appl.Cat.B.** | **Cat.Tod.** | **PSI Ex.1** |
| Temp., °C | 140 | 90 | 120 |
| Press., bar | | | 2 to 5 |
| GHSV, h⁻¹ | 34, 000 | 120,000 | 133,320 |
| Inlet % CO | 1.0 | 0.1 | 2.5 |
| Inlet % O₂ | 1.35 | 0.075 | 3.7 |
| Inlet % H₂ | 60 | 20 | 34.3 |
| Inlet % CO₂ | 25 | - | 16.3 |
| Inlet % H₂O | 10 | 10 | - |
| Inlet % N₂/He | -/2.65 | 69.8/- | 43.2/- |
| Wt.% Metal/Al₂O₃ | 2% Pt | 5% Pt/MO* | 5% Ru/4% Ce |
| CO conversion, % | 100 | 90 | 99.9 |
| H₂ conv., % | | | 7.7 |
| Hotspot, °C | | | 210 |
| Reaction rate** | 3.2 | 1.0 | 32.7 |

| | | | |
|---|---|---|---|
| * MO: undisclosed metal oxide promoter | | | |
| ** Reaction rate x 1.3 x 10⁻⁶ in mol CO conv/g catalyst/sec. | | | |

### Example 3: Experimental PROX data with the PSI Ex.1 catalyst

The catalyst used for this experimental observation was prepared according to the PSI Ex.1 catalyst and used under the same micro reactor conditions as described under Example 1 above. Now, figure 2 shows a comparison of the CO conversion at lambda = 2.6 and lambda = 3.0 with a 3% inlet CO at PROX conditions (T = 120°C, p = 5 bar). Surprisingly, it can be learned from these studies that a wide GHSV operating window exists for lambda = 3 while simultaneously achieving a superior CO conversion rate of more than 99.999%.

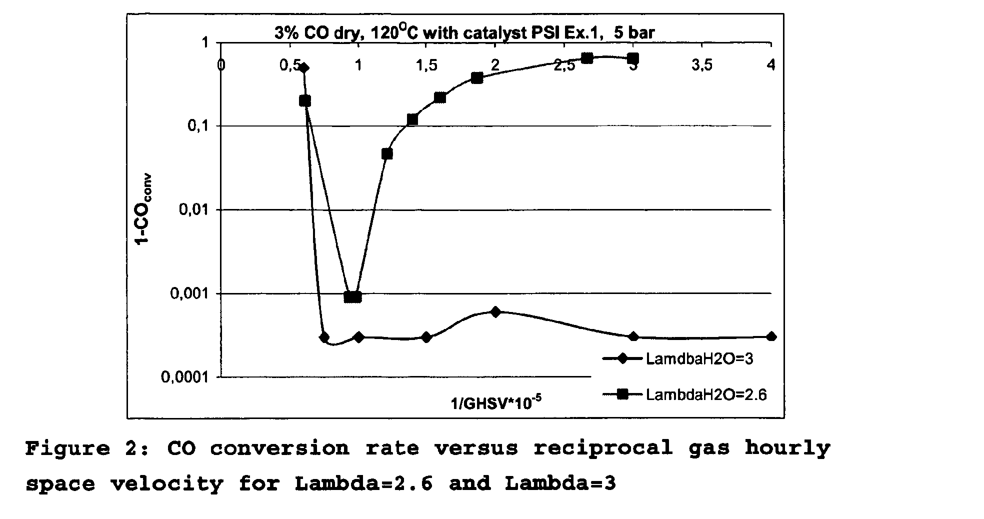

The figure shows a wide operating window for the gas hourly space velocity starting from appr. 25,000 h⁻¹ and ending close to 170,000 h⁻¹ with a CO conversion larger than by keeping lambda = 3. Nevertheless, figure 2 indicates that already very satisfying results are also achievable with a lambda = 2.6 water vapor content.

### Example 4: Experimental data for the PSI Ex.1 catalyst with different feeds

Table 3 shows the prox data with hydrocarbon derived reformats from both gaseous and liquid pox feeds. The data shows that with the C₁ to C₃ feeds the high selectivity for CO conversion is maintained with low H₂ conversions what is considered to be most desirable.

With iso-octane feed (i-C₈) and platformate (refinery feed) pox, high conversion rates for carbon monoxide are again observed with satisfactory H₂ conversions. Especially, when an active carbon adsorbent is placed between the pox and the prox reactor, the conversion rates for the undesired oxidation of hydrogen is significantly decreased from close to 30 % to less than 20 %.

**Table 3:**

| **Experimental data for the PSI Ex.1 catalyst with different feeds** | | | | | | |
|---|---|---|---|---|---|---|
| **Feed** | **CH**_{**4**} **pox** | **C**_{**1**}**-C**_{**3**} **pox** | **Platformate** | **i-C**_{**8**} **pox** | **i-C**_{**8**} **pox** | **i-C**_{**8**}**pox** |
| CO inlet, % | 1.50 | 1.52 | 1.25 | 2.4 | 3.0+C* | 3.0+C* |
| Temp., °C | 130 | 130 | 140 | 140 | 120 | 120 |
| Press., bar | 2 | 2 | 2 | 2 | 2 | 2 |
| GHSV, h⁻¹ | 45,960 | 46,200 | 18,000 | 58,320 | 77,550 | 71,640 |
| CO Conv., % | 99.7 | 99.7 | 99.8 | 99.9 | 99.9 | 99.9 |
| H₂ Conv., % | 4.6 | 5.0 | 10.0 | 28.0 | 19.1 | 17.5 |
| Hotspot, °C | 136 | 136 | | 160 | 170 | 170 |

| | | | | | | |
|---|---|---|---|---|---|---|
| C*: active carbon adsorbent (16.5 g) between the pox and the prox reactors | | | | | | |

As pointed out by the interpretation of the results from the different examples the nano-distribution of the cerium compound on the alumina lead to the significant increase of the catalytic activity of the catalyst. As far as results for comparison catalysts containing other rare earth metal compounds than cerium compounds do not exist in the prior art it should be pointed out that this nano-distribution of a rare earth metal compound not only serves as a stabilizing compound for the metal oxide support compound by contributes in a non-negligible manner already to the catalytic activity of the catalyst. Further, it has to be pointed out that the use of other noble metal compounds such as platinum, iridium but also compounds from tungsten, molybdenum can be considered in a reasonable manner. Additionally, the cerium might be changed with or supplemented with another or a group of other rare earth metal compounds, such as the oxides of praseodym, neodym and gadolinium.

## Claims

1. A method for preparing a catalyst for preferential oxidation to remove carbon monoxide from a hydrogen-rich gas stream, comprising:
forming an impregnated support material by impregnating a metal oxide or a mixture of metal oxides with a soluble rare earth metal compound or with a soluble mixture of rare earth metal compounds;
drying the impregnated support material; and
forming the catalyst by dispersing a precious metal or a mixture of precious metals on the impregnated support material.

2. The method according to claim 1,
**characterized in that**
the metal oxide is alumina.

3. The method according to claim 1 or 2,
**characterized in that**
the metal oxide is at least one from the group consisting of titania, zirconia and silica.

4. The method according to any one of the preceeding claims,
**characterized in that**
the rare earth metal compound is a Cerium-salt.

5. The method according to any one of the preceeding claims,
**characterized in that**
the rare earth metal compound is a Gadolinium-salt.

6. The method according to any one of the preceeding claims,
**characterized in that**
the dispersion of the precious metal or the mixture of precious metals is achieved by impregnating the impregnated support material with a soluble precious metal compound or with a soluble mixture of precious metal compounds.

7. The method according to any one of the preceeding claims,
**characterized in that**
the precious metal is Rhodium.

8. The method according to any one of the preceeding claims,
**characterized in that**
the precious metal is Ruthenium.

9. The method according to any one of the preceeding claims,
**characterized in that**
the amount of rare earth metal compound is 0.1 to 20, preferably 0.5 to 5 weight per cent of the total weight of the catalyst.

10. The method according to any one of the preceeding claims,
**characterized in that**
the amount of precious metal is 0.01 to 10, preferably 0.05 to 5 weight per cent of the total weight of the catalyst.

11. The method according to any one of the preceding claims,
**characterized in that**
the support material is in the form suitable for fixed bed reactor applications, such as granules, spheres, extrudates, cylinders, tablets, rings and half-rings.

12. The method according to any one of the preceding claims except claim 11,
**characterized in that**,
the support is in the form of monoliths or other structured support packings, such as ceramic honeycomb bodies, stacks of juxtaposed metallic plate-type catalysts having the catalytic material coated on the surfaces of the metallic plates, for fixed bed applications.

13. A process for preferential oxidation to remove carbon monoxide from a hydrogen-rich gas stream, comprising:
contacting the hydrogen-rich gas stream with a catalyst, manufactured according the method given in any one of the claims 1 to 12, under the condition of elevated temperature and pressure as compared with standard condition (20°C, 1 bar).

14. The process according to claim 13,
**characterized in that**
the hydrogen-rich gas stream is attained by passing a feed stream comprising a hydrocarbon or an oxygenate to a fuel processor comprising an integrated steam reforming and water gas shift conversion zone; said hydrogen-rich gas stream comprises hydrogen, carbon monoxide, carbon dioxide, oxygen and water.

15. The process according to claim 13 or 14,
**characterized in that**
the concentration of oxygen in the hydrogen-rich gas stream is maintained between 1 to 10, preferably 2.5 to 5.0 times of the stoichiometric requirement for the maximum conversion of CO to CO₂.

16. The process according to any one of the claims 13 to 15,
**characterized in that**
the temperature is between 60 and 250°C, preferably between 80 and 150°C.

17. The process according to any one of the claims 13 to 16,
**characterized in that**
the pressure is between 1 to 10 bar, preferably between 2 to 5 bar.

18. The process according to any one of the claims 13 to 17,
**characterized in that**
the gas hourly space velocity is between 20.000 to 200.000 per hour, preferably between 50.000 and 150.000 per hour.

19. The process according to any one of the claims 13 to 18,
**characterized in that**
the concentration of water vapour in the hydrogen-rich gas stream is maintained between 1 and 5 times, preferably 2 to 4 times, of the volume of the hydrogen-rich gas stream.

20. A method for operating a fuel cell system comprising a process for preferential oxidation to remove carbon monoxide from a hydrogen-rich gas stream according to any one of the claims 13 to 19.

21. The method according to claim 20,
**characterized in that**
passing a feed stream comprising a hydrocarbon or an oxygenate to a fuel processor comprising a catalyst forming an integrated steam reformation and water gas shift conversion zone to produce a fuel stream, i.e. a hydrogen-rich gas, at a catalyst temperature lower than 700°C followed by passing the fuel stream over a catalyst for preferential oxidation to produce a purified fuel gas at least approximately free from carbon monoxide.

22. The method according to claim 20 or 21,
**characterized in that**
the fuel stream contains about 50 to 50.000 ppm carbon monoxide.

23. The method according to any one of the claims 20 to 22,
**characterized in that**
the purified fuel gas contains less than 10 ppm carbon monoxide.
